# FASCICULE DE BREVET EUROPEEN

(11) **EP 0 426 510 B1**
(45) Date de publication et mention de la délivrance du brevet: **26.01.1994**
(21) Numéro de dépôt: 90402614.3
(22) Date de dépôt: 21.09.1990
(51) Int. Cl.: B62D 33/06

(54) **Suspension élastique de cabine de tracteur agricole**
Elastische Aufhängung der Kabine eines landwirtschaftlichen Schleppers
Resilient suspension of the cabin of an agricultural tractor

(30) Priorité: 31.10.1989 FR 8914261
(43) Date de publication de la demande: 08.05.1991
(73) Titulaire: RENAULT AGRICULTURE, 78141 Velizy-Villacoublay (FR)
(72) Inventeur: Dalaudière, Robert, F-78140 Velizy (FR); Dubois, Jean, F-92190 Meudon (FR)
(74) Mandataire: Ernst-Schonberg, Michel

(56) Documents cités:
- EP-A- 0 273 796
- DE-A- 2 157 595
- US-A- 3 101 809

## Description

L'invention concerne une suspension élastique de cabine de tracteur agricole qui comporte un châssis rigide, une cabine et une suspension élastique qui supporte ladite cabine sur ledit châssis, cette suspension étant constituée par des structures transversales avant et arrière portant des attaches d'éléments de la suspension et des structures reliées par des supports de liaison avec la cabine.

L'invention concerne plus particulièrement une telle suspension dans laquelle des structures transversales portent les attaches d'amortisseurs d'oscillations de roulis et des jambes élastiques montées sur des supports rapportés sur le châssis du tracteur.

Ce type de suspension, connu par la publication FR-A-2.432.966 accroît le confort du conducteur lorsque le tracteur se déplace sur le terrain irrégulier mais ne permet pas le montage ou le démontage de l'ensemble constitué par la cabine et de sa suspension ainsi que l'exigent les méthodes de fabrication ou de réparation. Par contre, lorsque la cabine est soumise à des oscillations verticales le dispositif d'amortissement des oscillations de roulis travaille alternativement en compression et en extension. Il en résulte une fatigue inconsidérée de ce dispositif.

L'invention propose une solution au problème précité et concerne une suspension élastique agencée pour que la cabine et sa suspension puissent être aisément désolidarisées du châssis du tracteur par des moyens simples et sans entraîner de dépenses importantes de conception.

L'invention s'applique avantageusement aux suspensions dans lesquelles les structures transversales avant et arrière sont formées par des traverses respectivement ancrées sur des supports de liaison avec le châssis rigide et portent des jambes élastiques avant et arrière parmi lesquelles les jambes avant supportent, par l'intermédiaire d'organes de liaison, conjointement la cabine et les structures latérales, tandis que les jambes arrière supportent la cabine.

Selon l'invention chaque extrémité de la traverse de structure avant supporte un levier de renvoi articulé à bras actionneurs dont un bras est lié au bras homologue de l'autre levier par l'amortisseur de roulis et dont l'autre bras est relié à la cabine.

La suspension précitée est adaptable à une pluralité de cabines, du fait qu'elle facilite la séparation de la cabine de son soubassement porteur de l'ensemble des organes de suspension dont la rigidité est conférée par la combinaison des traverses et des structures latérales. Par voie de conséquence, la suspension permet la réalisation d'un sous-ensemble rigide susceptible d'être monté séparément ou conjointement avec la cabine sur le poste d'assemblage du tracteur.

D'autres caractéristiques et avantages de l'invention seront mieux compris à la lecture de la description qui va suivre, d'un mode de réalisation de la suspension, faite en référence au dessin annexé, dans lequel :
- La figure 1 représente schématiquement une vue latérale de la cinématique de la suspension d'une cabine de conduite montée sur un châssis de tracteur,
- La figure 2 représente une vue en élévation de la partie avant des éléments cinématiques de la suspension représentée à la figure 1,
- La figure 3 est une représentation en plan de la suspension,
- La figure 4 est une représentation en perspective de la suspension.

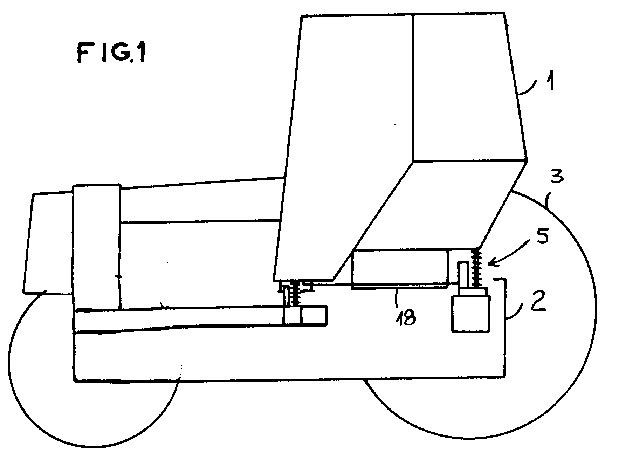

La figure 1 représente la cabine 1 et le châssis 2 d'un tracteur agricole monté sur des roues 3.

La suspension élastique 5 est montée entre le châssis 2 et la cabine 1.

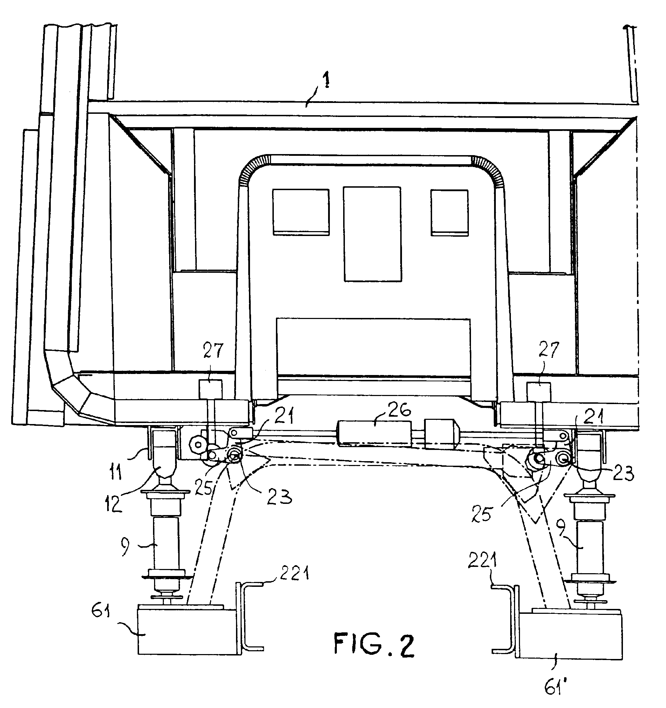

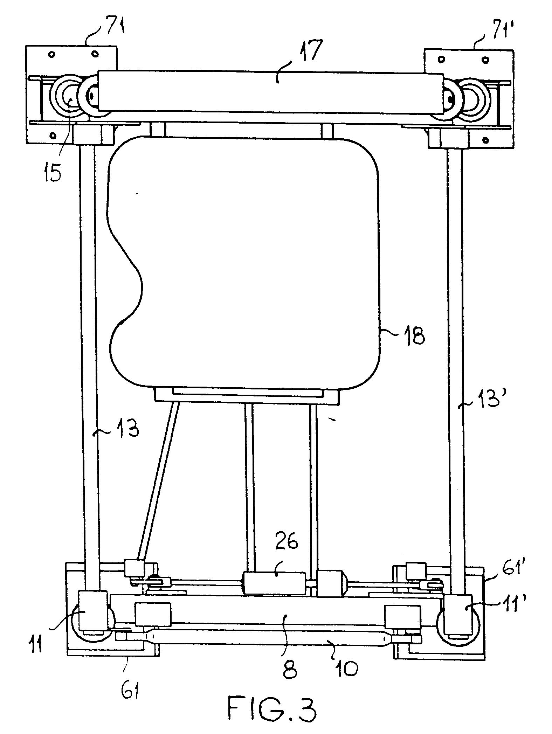

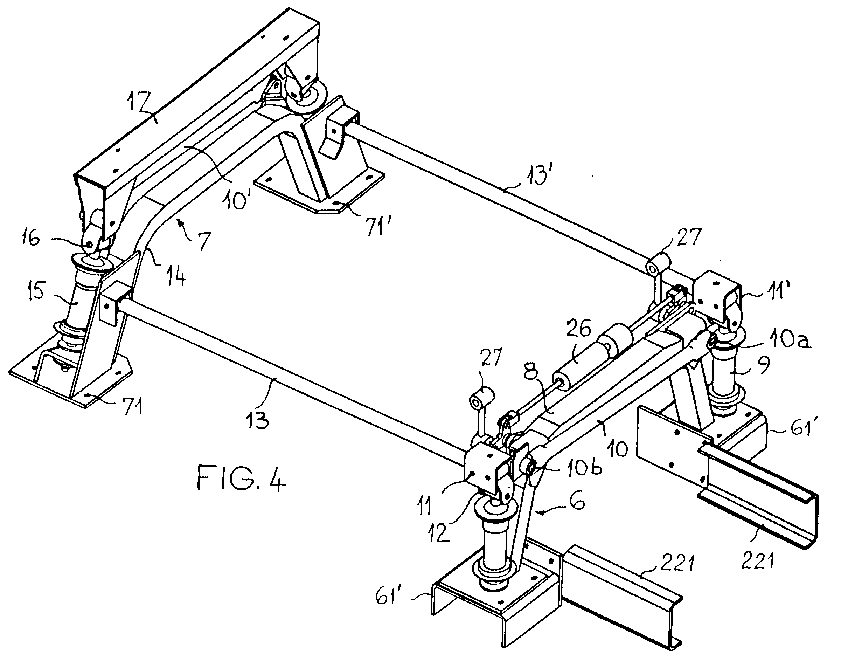

Ainsi que cela est montré aux figures 2 à 4 la suspension 5 est constituée par une structure avant 6 et une structure arrière 7 réalisées sous la forme de supports latéraux portant des ancrages d'éléments de la suspension.

La structure avant 6 est ainsi constituée par des supports 61, 61' dont les flancs, tournés vers les longerons 221 du châssis 2, sont boulonnés sur ceux-ci.

Les supports 61, 61' portent les ancrages des pieds obliques d'une traverse avant 8 qui possède une configuration générale en U et constituent les appuis de jambes élastiques 9 combinant de manière en soi connue un amortisseur télescopique placé concentriquement à un ressort disposés sensiblement dans le plan de la traverse. L'élément horizontal de la traverse 8 a un support destiné à coopérer avec une première extrémité 10a d'une barre transversale 10 disposée de manière que son orientation soit légèrement inclinée par rapport à l'horizontale et elle est articulée à son autre extrémité 10b sur un support latéral de liaison 11 avec le châssis de la cabine 1.

Le support de liaison tel que 11 est solidaire de la jambe élastique 9 correspondante par une rotule 12 et porte, outre l'ancrage de la barre transversale 10, le palier élastique de l'extrémité d'une structure latérale formée par une barre longitudinale 13.

D'une manière analogue, le support latéral opposé 11' recevant le châssis de la cabine est solidaire d'une autre jambe élastique 9 par une rotule 12 et porte le palier élastique de l'extrémité d'une structure latérale formée par une barre longitudinale 13'.

Les barres longitudinales 13, 13' sont reçues par leur autre extrémité, dans des paliers élastiques portés par les supports 71, 71' de la structure arrière 7.

Les supports 71, 71' portent les ancrages des pieds obliques d'une traverse arrière 14 qui possède également une configuration générale en U, et constituent les appuis de jambes élastique 15 analogues aux jambes 9 disposées sensiblement dans le plan de la traverse 14. La traverse arrière supporte, par ailleurs au moyen de fixations, des organes du châssis tels qu'un réservoir de combustible 18 ou une installation de distribution hydraulique.

La partie haute de chaque jambe élastique 15 porte une rotule 16 recevant une traverse supérieure 17 qui constitue un élément de structure de la cabine qui lui confère une bonne rigidité au niveau de son plancher.

Ainsi que cela a été mentionné pour la traverse avant 8, la traverse 14 porte également l'ancrage de l'extrémité d'une barre transversale 10' reliée par son autre extrémité à la traverse supérieure 17.

La traverse supérieure 17 s'étend sensiblement dans le plan transversal contenant la traverse arrière 14 et l'axe de l'essieu arrière.

A cet effet, les supports 71, 71' portent respectivement une base de fixation portée par les trompettes constitutives de l'essieu moteur du tracteur porteuses des socles de montage des supports 71, 71'.

Par ailleurs, les extrémités de la traverse 8 de structure avant portent les axes d'articulation 22 d'une paire de leviers de renvoi 23 en forme de L dont les bras verticaux homologues 21 sont reliés par le système amortisseur du roulis 26. L'autre bras 25 de chaque levier de renvoi 23 est relié à l'extrémité d'une biellette de suspension 27 de la cabine 1.

La suspension fonctionne de la manière suivante en remarquant que les jambes élastiques 9, 15 permettent au châssis de la cabine fixé notamment sur ses supports 11 et sur la traverse supérieure 17 d'amortir les déplacements consécutifs au mouvement de tangage.

### Amortissement des oscillations consécutives au roulis :

On suppose que la cabine oscille autour d'un axe longitudinal sensiblement perpendiculaire aux structures 6, 7 et comprime les jambes latérales 9, 15. Le support latéral de liaison 11 s'abaisse et la cabine a tendance à s'incliner vers la droite. La décomposition des efforts au niveau du support latéral opposé montre à la figure 2 que ceux-ci sont absorbés par les membrures de la cabine, par les barres transversales 10, 10' travaillant en extension et par l'amortisseur 26.

Lorsque les jambes latérales opposées 9, 15 sont comprimées, la cabine a tendance à s'incliner vers la gauche et la décomposition des efforts au niveau du support latéral correspondant montre que les efforts sont absorbés par les barres transversales 10, 10' travaillant en compression et par l'amortisseur 26.

### Amortissement des oscillations consécutives au mouvement de tanguage

Lorsque la cabine s'incline vers l'avant, les jambes élastiques avant 9 sont affaissées et les jambes arrières 15 sont détendues.

Les structures latérales 13, 13' évitent l'affaissement de la cabine.

Lorsque la cabine s'incline vers l'arrière, les jambes élastiques avant 9 sont détendues et les jambes arrière sont affaissées.

Les structures latérales 13, 13' assurent le maintien longitudinal de la cabine sans agir de quelque façon que ce soit sur les leviers 23 et sur l'amortisseur 26 du roulis.

## Revendications

1. Suspension élastique de cabine de tracteur agricole qui comporte un châssis (2) rigide, une cabine (1) et une suspension élastique (5) qui supporte ladite cabine sur le châssis, dans laquelle la suspension est constituée par des structures transversales avant (6) et arrière (7) formées par des traverses (8, 4) portant des attaches d'éléments (9) de la suspension et des structures (13, 13') reliés par des supports de liaison (11) à la cabine, caractérisée par le fait que chaque extrémité de la traverse de structure avant (8) supporte un levier de renvoi (23) articulé à bras actionneurs (21, 25) dont un bras (21) est lié au bras homologue de l'autre levier par l'amortisseur (26) de roulis et dont l'autre bras (25) est relié à la cabine.

## Patentansprüche

1. Elastische Aufhängung der Kabine eines landwirtschaftlichen Schleppers, der ein steifes Fahrgestell (2), eine Kabine (1) und eine elastische Aufhängung (5) aufweist, die die Kabine auf dem Fahrgestell trägt, wobei die Aufhängung aus vorderen (6) und hinteren (7) Queraufbauten besteht, welche durch Streben (8, 4) gebildet werden, die Befestigungselemente (9) der Aufhängung tragen und Aufbauten (13, 13'), die über Verbindungsträger (11) mit der Kabine verbunden sind, dadurch gekennzeichnet, daß jedes Ende der Strebe des vorderen Queraufbaus einen Kipphebel (23) aufweist, der an Betätigungsarmen (21, 25) angelenkt ist, wobei ein Arm (21) mit dem entsprechenden Arm des anderen Hebels über einen Stabilisator für die Wankbewegungen (26) verbunden ist und der andere Arm (25) mit der Kabine verbunden ist.

## Claims

1. An elastic suspension for a cabin of an agricultural tractor which comprises a rigid chassis (2), a cabin (1) and an elastic suspension (5) which supports the cabin on the chassis, in which the suspension is formed by front (6) and rear (7) transverse structures formed by crossbars (8, 4) bearing couplings for members (9) of the suspension and structures (13, 13') connected by supports (11) for connection to the cabin, characterized in that each end of the front structural crossbar (8) bears a return lever (23) articulated on actuator arms (21, 25), one arm (21) of which is connected to the counterpart arm of the other lever by the roll absorber (26) and the other arm (25) of which is connected to the cabin.
